# EUROPEAN PATENT APPLICATION

(11) **EP 4 449 918 A1**
(43) Date of publication of application: **23.10.2024**
(21) Application number: 22919892.4
(22) Date of filing: 25.10.2022
(51) Int. Cl.: A24F 40/46, A24F 40/10, C04B 38/06, C04B 35/14, C04B 41/90

(54) **CERAMIC ATOMIZATION CORE HAVING METAL COATING LAYER AND PREPARATION METHOD THEREFOR**

(30) Priority: 17.01.2022 CN 202210051190; 26.01.2022 CN 202210093913
(71) Applicant: Haining New Natao Technology Co., Ltd, Jiaxing, Zhejiang 314400 (CN)
(72) Inventor: LIU, Weili, Jiaxing, Zhejiang 314400 (CN); QIN, Fei, Jiaxing, Zhejiang 314400 (CN)
(74) Representative: Zaboliene, Reda
(86) International application number: PCT/CN2022/127354
(87) International publication number: WO 2023/134258

(57) **Abstract**

A ceramic atomization core having a metal coating layer and a preparation method therefor. The ceramic atomization core comprises a porous ceramic body (1), and a nanoscale metal coating layer (2) provided on a surface of the porous ceramic body (1). The porous ceramic body (1) is provided with a plurality of micropores (10) for absorbing, penetrating and conducting an atomized liquid, and the metal coating layer (2) is provided with through film holes (20) at the position corresponding to the surface micropores (10) of the porous ceramic body (1). The metal coating layer (2) comprises a heating layer (22) generating heat after being energized for evaporating the atomized liquid. The preparation method comprises preparation of the porous ceramic body (1), nanoscale metal coating performed on the surface of the porous ceramic body (1), and preparation of an electrode layer. The atomization core has the beneficial effects that the atomization amount is large, carbon deposition and liquid leakage are not prone to occurring, the circuit is not prone to being disconnected, the product consistency is good, and good use experience of a user is greatly improved.

## Description

### TECHNICAL FIELD

The present invention relates to the technical field of atomization core for an electronic atomizing device, and particularly relates to a ceramic atomization core having a metal coating layer and a preparation method therefor.

### BACKGROUND

An electronic atomization device heats a liquid to be atomized, i.e., an atomizing liquid, and emits smoke or aerosol for inhalation by a user. Existing electronic atomization device generally includes a battery component and an atomization component. The battery component has a battery supplying power to the atomizer, and the atomization component includes an atomization core. The atomization core generally includes a porous body and a heating element which atomizes atomizing liquid into aerosol when energized. The electronic atomization device is specifically applied to electronic cigarettes, medicine atomization devices, herbal essence atomization devices, etc. It basically provides heating and atomization functions, to convert an atomizing liquid such as a cigarette liquid, a medicinal liquid, and other solutions stored in the electronic atomization device into vapor, smoke, or aerosol.

The atomization core is the key component of electronic atomization devices, including electronic cigarettes, and its performance directly determines the atomization efficiency of the atomizing liquid, as well as smoke properties, efficacy and safety. The heating element is the key component of the atomizer and atomization core. At present, the traditional heating methods include the pre-embedded resistance heating wire, heating pad or printed circuit resistance heating. In order to improve the heating circuit area, grid resistance wire is also adopted, but in his type of heating method, the actual effective atomization area is small, the circuit board cannot well match the atomization surface of the atomization core, therefore the atomization can only take place in the area contacting with the heating metal, leading to a limited atomization amount of the atomizing liquid. In addition, a ceramic surface has a large temperature gradient and is unevenly heated because only part of the circuit can generate heat, hence it is easy to cause carbon deposition and liquid leakage. Meanwhile, the resistance wire or printed circuit heating method in the high temperature work conditions produces heat stress imbalance, and has the risk of circuit breakage, all of which will have a negative impact on the vaping experience and the consistency of the product.

### SUMMARY

### Technical problems

The present invention aims to solve the technical problems of small atomization amount, easy carbon deposition and liquid leakage, circuit breakage, and poor product consistency of existing atomization cores, and provides a ceramic atomization core with a metal coating layer and its preparation method.

### Solution to the Problems

### Technical Solution

A technical solution of the present invention is to provide a ceramic atomization core with a metal coating layer, comprising a porous ceramic body and a nanoscale metal coating layer arranged on the surface of the porous ceramic body. The porous ceramic body is provided with a plurality of micropores for absorbing, penetrating, and conducting an atomization liquid. The metal coating layer has through film holes in the position corresponding to surface micropores of the porous ceramic body. The metal coating layer includes a heating layer, which generates heat after being electrified to evaporate the atomization liquid by heating.

Preferably, the metal coating layer further includes a transition layer, which is provided between the porous ceramic body and the heating layer, and the transition layer and the heating layer are composed of different metals, alloys, or metal compound materials.

Preferably, the porous ceramic body further includes a surface treatment layer, which is provided between the porous ceramic body and the metal coating layer.

Preferably, the surface treatment layer is composed of several nanoscale sublayers, and the adjacent sublayers are composed of different materials.

Preferably, it also includes a protective layer for protecting the heating layer, which is provided on the outer side of the metal coating layer.

Preferably, the porous ceramic body has a porosity of 10% -70%, and the micropores in the porous ceramic body have an average pore size of 0.5um-70um.

Preferably, the porous ceramic body is prepared by sintering a porous ceramic green body, and the porous ceramic green body includes the following composition materials by weight: 25% - 70% ceramic powder, 5%-40% pore forming agent, 5%-40% sintering auxiliary, and 10%-35% forming agent.

Preferably, a material of the ceramic powder includes at least one selected from the group consisting of kaolin, diatomaceous earth, alumina, silicon nitride, silicon carbide, quartz sand, glass sand, clay, feldspar powder, fused quartz, cordierite, and mullite.

Preferably, the ceramic powder further includes nano silica.

Preferably, the granularity of the ceramic powder is 100 mesh-2000 mesh.

Preferably, a material of the pore forming agent includes at least one selected from the group consisting of graphite, starch, wood powder, flour, soybean powder, polystyrene microspheres, polymethyl methacrylate microspheres, sucrose, and plant fibers.

Preferably, the particle size of the pore forming agent is 5um-100um.

Preferably, a material of the sintering auxiliary includes at least one selected from the group consisting of boron oxide, sodium silicate, silicon oxide, potassium oxide, lithium oxide, barium oxide, magnesium oxide, calcium oxide, iron oxide, titanium oxide, zinc oxide, and zirconia.

Preferably, a material of the forming agent includes at least one selected from the group consisting of paraffin, beeswax, boric acid, oleic acid, stearic acid, polyethylene, polypropylene, polyvinyl acetate, polyvinyl acetal, ethylene acetate vinyl copolymer resin, vinyl chloride vinyl acetate copolymer resin, perchloroethylene resin, polyacrylate, and polyamide.

Preferably, a material of the surface treatment layer includes at least one selected from the group consisting of zirconia, silicon oxide, aluminum nitride, and silicon nitride.

Preferably, the thickness of the surface treatment layer is 5nm-500nm.

Preferably, a material of the transition layer includes at least one selected from the group consisting of titanium, tantalum, niobium, titanium nitride, tantalum nitride, and niobium nitride, and a material of the heating layer includes at least one selected from the group consisting of platinum, silver, palladium, nickel, chromium, silver palladium alloy, and nickel chromium alloy.

Preferably, the thickness of the transition layer is 5nm-200nm, and the thickness of the heating layer is 50nm-1500nm.

Preferably, the transition layer and the heating layer are prepared by a metal coating process selected from the group consisting of direct current sputtering method, magnetron sputtering method, and vacuum evaporation method.

Preferably, a material of the protective layer includes at least one selected from the group consisting of aluminum oxide, silicon nitride, boron nitride, titanium nitride, and tantalum nitride.

Preferably, the thickness of the protective layer is 50nm-1um.

Preferably, the two distal ends of the metal coating layer are provided with electrode layers closely fit and bonded to the metal coating layer.

Preferably, the electrode layer with a thickness of 10um-200um is prepared by printing a silver paste, a silver palladium paste, or a nickel chromium paste on the porous ceramic body or the metal coating layer, and sintering.

The present invention is further to provide a preparation method of a ceramic atomization core with a metal coating layer, comprising the following steps:
(1) weighing a ceramic powder, a sintering auxiliary, a pore forming agent, and a forming agent according to a composition, and mixing the weighed materials with an internal mixer and granulating to obtain a granulation body;
(2) adding the granulation body in a mold of an injection molding machine to obtain a porous ceramic green body through injection molding;
(3) embedding the porous ceramic green body into a dewaxing powder and performing dewaxing sintering, washing away the dewaxing powder and drying, and performing a secondary sintering to obtain the porous ceramic body;
(4) subjecting the porous ceramic body to ultrasonic cleaning, drying, and vacuum drying treatment;
(5) placing the porous ceramic body in a coating fixture with only an atomizing surface of the porous ceramic body exposed, coating the exposed surface of the porous ceramic body through physical vapor deposition coating technology, namely PVD technology, using a magnetron sputtering instrument, to form a transition layer;
(6) after forming the transition layer, coating the transition layer by PVD technology, using a magnetron sputtering instrument, to form a heating layer;
(7) after forming the heating layer, placing the porous ceramic body in a printing fixture, and printing a silver paste on the two distal ends of the heating layer through a pre-made screen, then leveling at a set temperature;
(8) transferring the porous ceramic body printed with the silver paste to an oven for drying, and finally sintering to obtain a silver electrode layer.

Another technical solution of the present invention is to provide a preparation method of a ceramic atomization core with a metal coating layer, comprising the following steps:
(1) weighing a ceramic powder, a sintering auxiliary, a pore forming agent, and a forming agent according to a composition, and mixing the weighed materials with an internal mixer and granulating to obtain a granulation body;
(2) adding the granulation body in a mold of an injection molding machine to obtain a porous ceramic green body through injection molding;
(3) embedding the porous ceramic green body into a dewaxing powder and performing dewaxing sintering, washing away the dewaxing powder and drying, and performing a secondary sintering to obtain the porous ceramic body;
(4) placing the porous ceramic body in a printing fixture, and printing a silver paste on the two distal ends of the porous ceramic body through a pre-made screen, then leveling at a set temperature;
(5) transferring the porous ceramic body into an oven for drying, and finally sintering to obtain a ceramic atomization core with a silver electrode layer;
(6) subjecting the porous ceramic body to ultrasonic cleaning, drying, and vacuum drying treatment;
(7) placing the porous ceramic body in a coating fixture with only the atomizing surface of the porous ceramic body exposed, coating the exposed surface of the porous ceramic body through physical vapor deposition coating technology, namely PVD technology, using a magnetron sputtering instrument, to form a transition layer;
(8) after forming the transition layer, coating the transition layer through PVD technology, using a magnetron sputtering, to form a heating layer.

Additional technical solution of the present invention is to provide a preparation method of a ceramic atomization core with a metal coating layer, comprising the following steps:
(1) weighing a ceramic powder, a sintering auxiliary, a pore forming agent, and a forming agent according to a composition, and mixing the weighed materials with an internal mixer and granulating to obtain a granulation body;
(2) adding the granulation body in a mold of an injection molding machine to obtain a porous ceramic green body through injection molding;
(3) embedding the porous ceramic green body into a dewaxing powder and performing dewaxing sintering, washing away the dewaxing powder and drying, and performing a secondary sintering to obtain the porous ceramic body;
(4) subjecting the porous ceramic body to ultrasonic cleaning, drying, and vacuum drying treatment;
(5) placing the porous ceramic body in a fixture, with only the atomizing surface of the porous ceramic body exposed, subjecting the exposed surface of the porous ceramic body to a surface treatment through PVD coating technology or CVD coating technology, to obtain a surface treatment layer;
(6) placing the surface treated porous ceramic body in a coating fixture, with only the atomizing surface of the porous ceramic body exposed, and coating the surface treatment layer of the porous ceramic body through physical vapor deposition coating technology, namely PVD technology, using a magnetron sputtering instrument, to form a transition layer;
(7) after forming the transition layer, coating the transition layer through PVD technology, using a magnetron sputtering instrument, to form a heating layer;
(8) after forming the heating layer, placing the porous ceramic body in a printing fixture, and printing a silver paste on the two distal ends of the heating layer through a pre-made screen; leveling at a set temperature after the printing;
(9) transferring the porous ceramic body to an oven for drying after printing the silver paste, finally sintering to obtain a silver electrode layer;
(10) further subjecting the outer surface of the heating layer to a coating protection treatment to obtain a protective layer.

Preferably, the dewaxing is carried out at a temperature of 300°C-800°C, and the secondary sintering is carried out at a temperature of 700°C-1200°C.

Preferably, the transition layer is formed by coating the surface of the ceramic body with a titanium target having a purity higher than 99%, and the transition layer has a thickness of 5nm-200nm.

Preferably, the heating layer coating is formed by coating the surface of the transition layer with a platinum target having a purity higher than 99%, and the heating layer has a thickness of 50nm-1500nm.

Preferably, the surface treatment is carried out by PVD coating or CVD coating on the atomizing surface of the porous ceramic body using at least one of zirconia, silicon oxide, aluminum nitride, or silicon nitride, to obtain the surface treatment layer with a thickness of 5nm-500nm.

Preferably, the surface treatment layer is obtained by four consecutive PVD coatings of zirconia, silicon oxide, zirconia, and silicon oxide on the atomizing surface of the porous ceramic body.

Preferably, the coating protection treatment is carried out by PVD coating on the outer surface of the silver electrode layer and the heating layer using at least one of alumina, silicon nitride, boron nitride, titanium nitride, and tantalum nitride, to obtain a protective layer with a thickness of 50nm-1um.

### Beneficial Effects of The Invention

### Beneficial effects

A heating element of the atomization core is an ultra-thin nanoscale metal coating layer covering the surface of the porous ceramic body. The metal coating layer is also provided with through film holes, so the actual effective atomization area is large. At the same time, aerosol can be released from the film holes freely, which can match well with the atomization surface, thus greatly improving the atomization amount of the atomization liquid. In addition, due to the fact that the entire surface of the metal coating layer can generate heat, the temperature of the atomization surface of the porous ceramic is uniformly heated, and it will not produce carbon deposition or liquid leakage easily. There is no uneven thermal stress under high temperature operation, and the metal coating layer has no risk of circuit breaking. These characteristics improve the product consistency in use and bring a good user experience.

### BRIEF DESCRIPTION OF THE DRAWINGS

### Description of drawings

Figure 1 is schematic sectional view I of the atomization core structure of the present invention;
Figure 2 is schematic sectional view II of the atomization core structure of the present invention;
Figure 3 is schematic sectional view III of the atomization core structure of the present invention;
Figure 4 is an upward view of the atomization core in Example 1 of the present invention;
Figure 5 is an enlarged view of Part A of the metal coating layer of Examples 1 and 2 of the present invention;
Figure 6 is a three-dimensional decomposition structure view I of the inverted atomization core in Example 1 of the present invention;
Figure 7 is a three-dimensional decomposition structure view II of the inverted atomization core in Example 1 of the present invention;
Figure 8 is a three-dimensional view of the atomization core in Example 2 of the present invention;
Figure 9 is a three-dimensional decomposition structure view of the atomization core in Example 2 of the present invention;
Figure 10 is a three-dimensional structural sectional view of the atomization core in Example 2 of the present invention;
Figure 11 is a three-dimensional decomposition structure view of the inverted atomization core in Example 3 of the present invention;
Figure 12 is a three-dimensional decomposition structure view of the surface treatment layer of the atomization core in Example 3 of the present invention.

### DETAILED DESCRIPTION OF THE EXAMPLES

### Best embodiment of the present invention

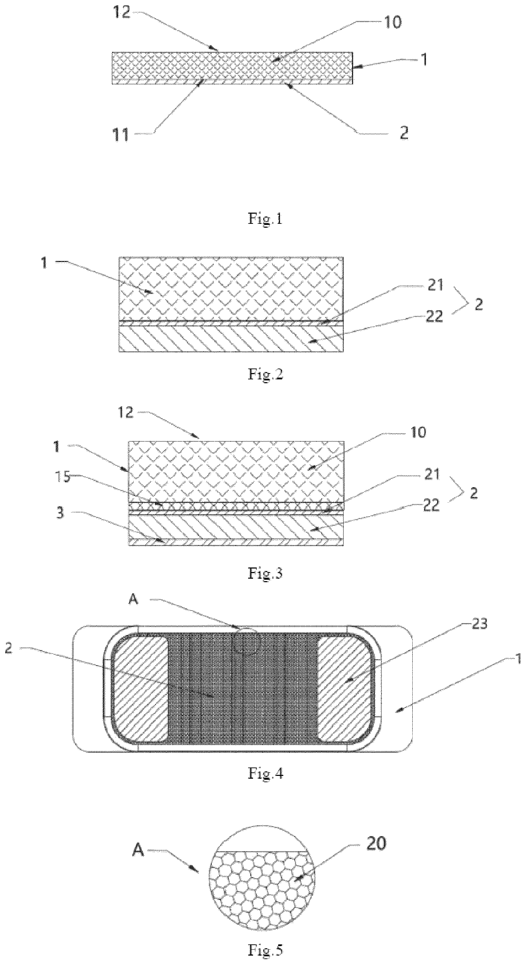

As shown in Figure 1, the ceramic atomization core with a metal coating layer of the present invention includes a porous ceramic body 1 and a metal coating layer 2. The porous ceramic body 1 is provided with a plurality of dense micropores 10 for absorbing, penetrating, and conducting the atomization liquid. The porous ceramic body 1 includes at least one atomizing surface 11 that heats and atomizes the atomization liquid to produce aerosol. The opposite side of the atomizing surface 11 is set as a liquid suction surface 12, and the atomizing liquid is transmitted from the liquid suction surface 12 to the atomizing surface 11. The metal coating layer 2 is provided on the atomizing surface 11 of the porous ceramic body. The metal coating layer 2 includes a heating layer 22, which generates heat after being electrified. The metal coating layer 2 includes a transition layer 21 and a heating layer 22 composed of two different metal or alloy or metal compound materials, respectively, which means the materials of the transition layer 21 and the heating layer 22 are two different metal or alloy or metal compound materials. The metal coating layer 2 is provided with through film holes 20 in the position corresponding to the micropores 10 on the surface of the porous ceramic body, i.e. the atomizing surface. Aerosol can be released from the film holes 20 unobstructed, so that the metal coating layer 2 can fit well with the atomizing surface 11. Therefore, the amount of atomized atomizing liquid is greatly increased, providing good user experience.

After the metal coating layer 2 is electrified through the silver electrode 23, the entire coated surface of the porous ceramic body becomes an atomizing surface. The atomization core of the present invention has the advantages of a larger atomizing area and a more uniform temperature due to the entire coated porous ceramic body surface in contact with the metal coating layer as the atomizing surface, ensuring high smoke volume and avoiding the problems of carbon deposition and liquid leakage, as well as the problem of burnt smell and so on. In addition, since the entire surface of the metal coating layer generates heat, the temperature of the atomizing surface of the porous ceramic body is uniformly heated, and there is no uneven thermal stress under high temperature operation. The porous ceramic body 1 will not fracture, and there is no risk of circuit breaking in the metal coating layer. Moreover, another advantage of the nano layered metal coating layer as a heating element is that the conductivity and resistance value of the entire atomizing surface will not be affected by some point defects. Therefore, the product has high consistency, long cycle life, and can bring a stable experience.

As shown in Figure 2, the metal coating layer 2 is formed by physical vapor deposition (PVD) method, and the metal target is coated on the surface of the porous ceramic body using a magnetron sputtering instrument. The metal coating layer 2 is a nanoscale metal layer, and during the sputtering coating, the nanoscale metal layer will not block the micron scale micropores 10 of the porous ceramic body. Therefore, the nanoscale metal coating layer 2 has the through film holes 20. The metal coating layer 2 includes a transition layer 21 and a heating layer 22 that are mutually closely fit and bonded, and the transition layer 21 is closely fit and bonded to the atomizing surface 11 of the porous ceramic body. The transition layer 21 is composed of metallic titanium with a thickness of 5nm-200nm, and the heating layer 22 is composed of metallic platinum with a thickness of 50nm-1500nm. The heating layer 22 adopts metallic platinum, mainly due to its lower resistivity, but more importantly, it has chemical inertness, which can effectively resist the mutual diffusion between the layer and the ceramic body at high working temperatures, leading to an increase in resistance and affecting the consistency of the atomizing core. The titanium coating of the transition layer 21 can not only enhance the adhesion between the metallic platinum and the ceramic body, but also prevent the reaction between the metallic platinum and silicon materials in the porous ceramic body forming silicides at high temperatures during the atomizer's operation. The transition layer 21 and the heating layer 22 can be composed of other metals, alloys, or metal compounds with similar properties.

The porous ceramic body has a porosity of 10% -70%, and the micropores in the porous ceramic body have an average pore size of 0.5um-70um.

The porous ceramic body is obtained by sintering a porous ceramic green body. The material of the porous ceramic green body includes the following components by weight: 25%-70% ceramic powder, 5%-40% pore forming agent, 5%-40% sintering auxiliary, and 10%-35% forming agent.

The material of the ceramic powder includes at least one selected from the group consisting of kaolin, diatomaceous earth, alumina, silicon nitride, silicon carbide, quartz sand, glass sand, clay, feldspar powder, fused quartz, cordierite, and mullite. The material of the ceramic powder also includes nano silica.

The ceramic powder has a granularity of 100 mesh-2000 mesh.

The material of the pore forming agent includes at least one selected from the group consisting of graphite, starch, wood powder, flour, soybean powder, polystyrene microspheres, polymethyl methacrylate microspheres, sucrose, and plant fibers.

The particle size of the pore forming agent is 5um-100um.

The materials of the sintering auxiliary includesat least one selected from the group consisting of boron oxide, sodium silicate, silicon oxide, potassium oxide, lithium oxide, barium oxide, magnesium oxide, calcium oxide, iron oxide, titanium oxide, zinc oxide, and zirconia.

The material of the forming agent includes at least one selected from the group consisting of paraffin, beeswax, boric acid, oleic acid, stearic acid, polyethylene, polypropylene, polyvinyl acetate, polyvinyl acetal, ethylene acetate vinyl copolymer resin, vinyl chloride vinyl acetate copolymer resin, perchloroethylene resin, polyacrylate, and polyamide.

The material of the transition layer 21 includes at least one selected from the group consisting of titanium, tantalum, niobium, titanium nitride, tantalum nitride, and niobium nitride, while the material of the heating layer 22 includes at least one selected from the group consisting of platinum, silver, palladium, nickel, chromium, silver palladium alloy, and nickel chromium alloy.

The thickness of the transition layer 21 is 5nm-200nm, and the thickness of the heating layer is 50nm-1500nm.

The metal coating process for transition layer 21 and heating layer 22 includes direct current sputtering, magnetron sputtering, and vacuum evaporation.

The two distal ends of the metal coating layer 2 are provided with electrode layers 23 closely fit and bonded to the metal coating layer.

The electrode layer 23 is obtained by printing a silver paste, a silver palladium paste, or a nickel chromium paste on the porous ceramic body 1 or metal coating layer 2 and then sintering, the electrode layer has a thickness of 10um-200um.

As shown in Figure 3, the porous ceramic body 1 is further provided with a surface treatment layer 15, which is provided between the porous ceramic body 1 and the metal coating layer 2. The surface treatment layer 15 can reduce the roughness and improve the flatness of the ceramic body surface, so that the metal coating layer 2 or transition layer 21 can better adhere to the porous ceramic body 1, further enhancing the adhesion of the heating layer 22 and making it more uniform. The surface treatment layer 15 is composed of several nanoscale sublayers, and the adjacent sublayers are formed with different materials. The materials of the surface treatment layer include at least one of zirconia, silicon oxide, aluminum nitride, and silicon nitride. The thickness of the surface treatment layer is 5nm-500nm.

As shown in Figure 3, the atomization core also includes a protective layer 3 for protecting the heating layer 22. The protective layer 3 is provided on the outer side of the metal coating layer 2, and has the function of protecting the heating layer 22 from oxidation and corrosion. The material of the protective layer 3 includes at least one selected from the group consisting of aluminum oxide, silicon nitride, boron nitride, titanium nitride, and tantalum nitride, and the protective layer has a thickness of 50nm-1um.

A preparation method for a ceramic atomizing core with a metal coating layer of the present invention, comprising the following steps:
(1) weighing a ceramic powder, a sintering auxiliary, a pore forming agent, and a forming agent according to a composition, and mixing the weighed materials with an internal mixer and granulating to obtain a granulation body;
(2) adding the granulation body in a mold of an injection molding machine to obtain a porous ceramic green body through injection molding;
(3) embedding the porous ceramic green body into a dewaxing powder and performing dewaxing sintering, washing away the dewaxing powder and drying, and performing a secondary sintering to obtain the porous ceramic body;
(4) subjecting the porous ceramic body to ultrasonic cleaning, drying, and vacuum drying treatment;
(5) placing the porous ceramic body in a coating fixture with an atomizing surface of the porous ceramic body exposed only, coating the exposed surface of the porous ceramic body through physical vapor deposition coating technology, namely PVD technology, using a magnetron sputtering instrument, to form a transition layer;
(6) after forming the transition layer, coating the transition layer by PVD technology, using a magnetron sputtering instrument, to form a heating layer;
(7) after forming the heating layer, placing the porous ceramic body in a printing fixture, and printing a silver paste on the two distal ends of the heating layer through a pre-made screen, then leveling at a set temperature;
(8) transferring the porous ceramic body printed with the silver paste to an oven for drying, and finally sintering to obtain a silver electrode layer.

Another preparation method of a ceramic atomization core with a metal coating layer of the present invention, comprising the following steps:
(1) weighing a ceramic powder, a sintering auxiliary, a pore forming agent, and a forming agent according to a composition, and mixing the weighed materials with an internal mixer and granulating to obtain a granulation body;
(2) adding the granulation body in a mold of an injection molding machine to obtain a porous ceramic green body through injection molding;
(3) embedding the porous ceramic green body into a dewaxing powder and performing dewaxing sintering, washing away the dewaxing powder and drying, and performing a secondary sintering to obtain the porous ceramic body;
(4) placing the porous ceramic body in a printing fixture, and printing a silver paste on the two distal ends of the porous ceramic body through a pre-made screen, then leveling at a set temperature;
(5) transferring the porous ceramic body into an oven for drying, and finally sintering to obtain a ceramic atomization core with a silver electrode layer;
(6) subjecting the porous ceramic body to ultrasonic cleaning, drying, and vacuum drying treatment;
(7) placing the porous ceramic body in a coating fixture with only the atomizing surface of the porous ceramic body exposed, coating the exposed surface of the porous ceramic body through physical vapor deposition coating technology, namely PVD technology, using a magnetron sputtering instrument, to form a transition layer;
(8) after forming the transition layer, coating the transition layer through PVD technology, using a magnetron sputtering, to form a heating layer.

Another preparation method of a ceramic atomization core with a metal coating layer of the present invention, comprising the following steps:
(1) weighing a ceramic powder, a sintering auxiliary, a pore forming agent, and a forming agent according to a composition, and mixing the weighed materials with an internal mixer and granulating to obtain a granulation body;
(2) adding the granulation body in a mold of an injection molding machine to obtain a porous ceramic green body through injection molding;
(3) embedding the porous ceramic green body into a dewaxing powder and performing dewaxing sintering, washing away the dewaxing powder and drying, and performing a secondary sintering to obtain the porous ceramic body;
(4) subjecting the porous ceramic body to ultrasonic cleaning, drying, and vacuum drying treatment;
(5) placing the porous ceramic body into a fixture, with only the atomizing surface of the porous ceramic body exposed, subjecting the exposed surface of the porous ceramic body to a surface treatment through PVD coating technology or CVD coating technology, to obtain a surface treatment layer;
(6) placing the surface treated porous ceramic body in a coating fixture, with only a atomizing surface of the porous ceramic body exposed, and coating the surface treatment layer of the porous ceramic body through physical vapor deposition coating technology, namely PVD technology, using a magnetron sputtering instrument, to form a transition layer;
(7) after forming the transition layer, coating the transition layer through PVD technology, using a magnetron sputtering instrument, to form a heating layer;
(8) after forming the heating layer coating, placing the porous ceramic body in a printing fixture, and printing a silver paste on the two distal ends of the heating layer through a pre-made screen, leveling at a set temperature after the printing;
(9) transferring the porous ceramic body to an oven for drying after printing the silver paste, finally sintering to obtain a silver electrode layer;
(10) further subjecting the outer surface of the heating layer to a coating protection treatment to obtain a protective layer.

In the steps of the above methods,
the dewaxing is carried out at a temperature of 300°C-800°C, and the secondary sintering is carried out at a temperature of 700°C-1200°C.

The transition layer is formed by coating the surface of the ceramic body with a titanium target having a purity higher than 99%, and the transition layer, namely a titanium coating, has a thickness of 5nm-200nm.

The heating layer coating is formed by coating the surface of the transition layer with a platinum target having a purity higher than 99%, and the heating layer, namely a platinum coating, has a thickness of 50nm-1500nm.

The material of the surface treatment layer includes at least one selected from the group consisting of zirconia, silicon oxide, aluminum nitride, or silicon nitride, and the surface treatment layer has a thickness of 5nm-500nm.

The material of the protective layer 3 includes at least one selected from the group consisting of alumina, silicon nitride, boron nitride, titanium nitride, and tantalum nitride, and the protective layer has a thickness of 50nm-1um.

### Embodiments of the Invention

### Examples of the present invention

Detailed description of the present invention will be provided through specific embodiments below.

### Example 1:

As shown in Figures 4-7, the present invention provides a ceramic atomization core with a metal coating layer 2. The porous ceramic body 1 is a rectangular prism, and the bottom surface of the rectangular prism is provided with a metal coating layer 2. The two distal ends of the metal coating layer 2 are provided with electrode layers 23, which are composed of metallic silver. The thickness of the electrode layer 23 is 40um. Metallic silver is selected as the electrode material because it has extremely low electrical resistivity and good chemical stability, which can provide stable conductivity performance during atomizer operation.

### Example 2:

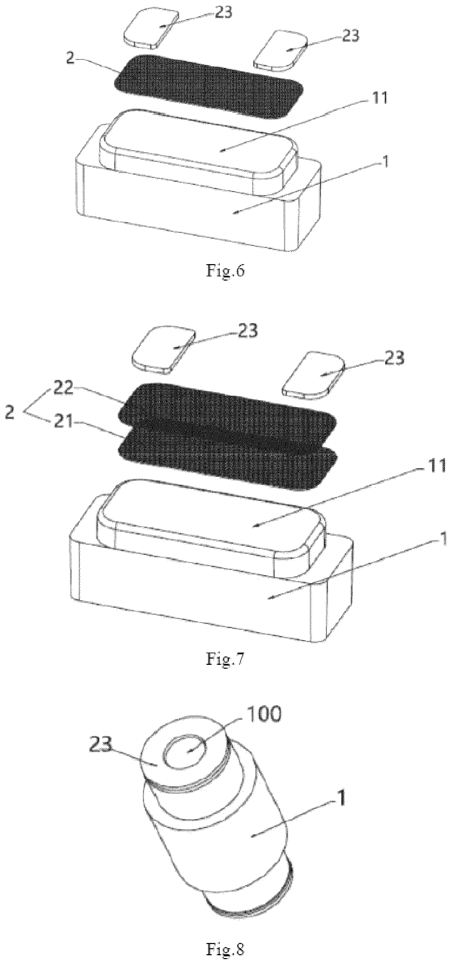

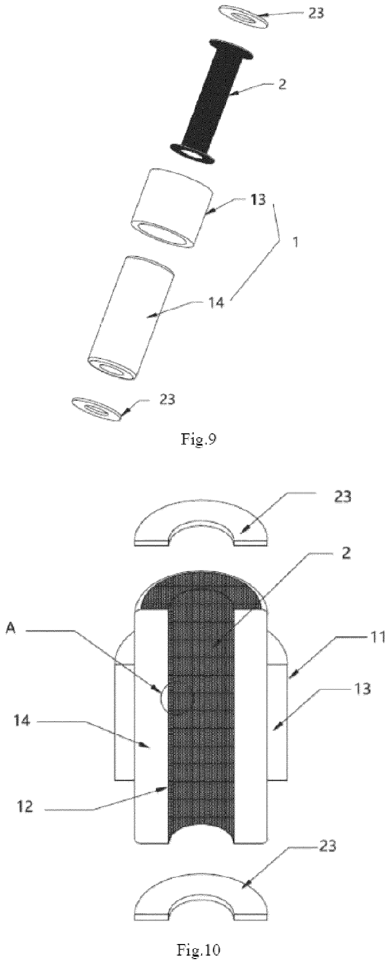

As shown in Figures 8-10, the present invention provides a ceramic atomization core with a metal coating layer 2. The porous ceramic body 1 is a cylinder with an atomization through-hole 100 in the center. The porous ceramic body 1 includes an inner layer 14 and an outer layer 13. The two end faces of the cylinder and the inner wall of the atomization through-hole 100 are provided with a metal coating layer 2. The two distal ends of the metal coating layer 2, namely the two end faces of the cylinder, are also provided with an electrode layer 23. The electrode layer 23 is composed of metallic silver, with a thickness of 40um.

### Example 3:

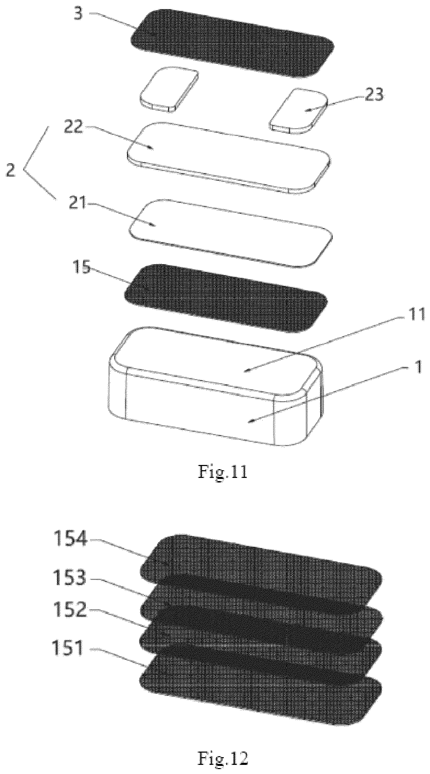

As shown in Figure 11, the present invention provides a ceramic atomization core with a metal coating layer 2. The porous ceramic body 1 is a rectangular prism, and the bottom surface of the porous ceramic body 1 is provided with a surface treatment layer 15. A metal coating layer 2 is provided on the surface treatment layer 15. The metal coating layer 2 includes a transition layer 21 and a heating layer 22. The two distal ends of the heating layer 22 are provided with electrode layers 23, which is composed of metallic silver. There is also a protective layer 3 on the electrode layer 23 and the heating layer 22, which is an aluminum oxide coating with a thickness of 100nm. The protective layer 3 has the function of protecting the heating layer 22 from oxidation and corrosion, avoiding carbon deposition and blackening after long-term use. At the same time, the protective layer 3 has good thermal conductivity, so that the heating layer 22 generates heat more evenly, the surface temperature is easy to control, ensuring a better taste.

As shown in Figure 12, the surface treatment layer 15 includes four layers, which are sequentially a zirconia layer 151, a silicon oxide layer 152, a zirconia layer 153, and a silicon oxide layer 154. The surface treatment layer 15 can reduce the roughness of the ceramic surface and improve the flatness, so that the metal coating layer 2 or transition layer 21 can better adhere to the porous ceramic body 1, further enhancing the adhesion of the heating layer 22 and making it more uniform. At the same time, the surface treatment layer 15 is added to prevent the loss of atomizing liquid in the porous ceramic body 1, improve the liquid locking ability, and ensure the balance between liquid supply and atomization. In addition, the surface treatment layer 15 can also increase thermal resistance to prevent excessive heat transferring to the porous ceramic body, and prevent heat loss, so that the heating layer 22 can heat fast when working, to elevate the high atomization efficiency, generate large smoke volume, and ensure a good taste. The four sublayers of the surface treatment layer 15 can be coated in several steps using the same process, which can increase the thickness of the surface treatment layer 15 and better improve the flatness of the atomized surface of porous ceramic body 1.

### Example 4:

The preparation method of a ceramic atomization core with a metal coating layer 2 of the present invention includes the following steps:
1. Preparing materials and mixing: Materials of 45% ceramic powder, 18% sintering auxiliary, 17% pore forming agent, and 20% forming agent according to the composition in weight percentages are weighed and prepared, wherein the ceramic powder contains 70% quartz powder, 20% aluminum oxide powder, and 10% diatomaceous earth powder; the sintering auxiliary includes 20% sodium silicate, 40% silicon oxide, 30% boron oxide, and 10% zinc oxide; the forming agent includes 30% paraffin, 3% beeswax, 47% vinyl chloride acetate copolymer resin, 12% stearic acid, and 8% polyethylene. Mix the above materials with an internal mixer and granulate to obtain a granulated material.
2. Injection molding: The granulated material obtained in the previous step is added to the mold of the injection molding machine, to obtain a porous ceramic green body through injection molding.
3. Dewaxing sintering: Embed the porous ceramic green body obtained in the previous step into a dewaxing powder for dewaxing sintering at a dewaxing temperature of 650°C. The dewaxed green body is washed to remove the dewaxing powder, dried, and then subjected to secondary sintering at 1000°C to obtain the porous ceramic body 1.
4. Porous ceramic body cleaning: the porous ceramic body 1 obtained in the previous step is subjected to ultrasonic cleaning, drying, and vacuum drying.
5. Physical Vapor Deposition (PVD) coating: Place the previously processed porous ceramic body 1 into a PVD fixture, exposing only the atomizing surface of the porous ceramic body. The exposed surface of the ceramic body is coated through PVD technology, to deposit the transition layer 21, namely the titanium film first. Using a magnetron sputtering instrument, the titanium film having a thickness of 60nm was formed on the surface of the porous ceramic body 1 with a titanium target of 99.99% purity.
6. The platinum film was deposited after the titanium film deposition is completed. A platinum target with 99.99% purity is used to prepare a heating layer, namely the platinum film, with a thickness of 320nm on the surface of the porous ceramic body 1.
7. Printing silver electrode: Place the porous ceramic body 1 deposited with platinum/titanium film obtained in the previous step in a printing fixture, and 70um thick silver paste was printed on the two distal ends of the platinum/titanium film through a pre-made screen. After the printing, level it at a temperature of 20°C for 10 minutes.
8. Transfer the porous ceramic body 1 printed with the silver paste to a 120°C oven and dry for 15 minutes, and finally sinter it at 750°C for 10 minutes, to obtain silver electrodes 23 with a thickness of 40um at the two distal ends of the metal coating layer 2.

In other embodiments, the above step of printing and sintering silver electrodes can be placed before the metal coating steps, that is, the silver electrodes were printed and sintered on the porous ceramic body first, before conducting the metal coating steps.

### Industrial applicability

The above are only preferred embodiments of the present invention, and any equal changes and modifications made within the scope of the claims of the present invention should fall within the range covered by the claims of the present invention.

## Claims

1. A ceramic atomization core with a metal coating layer, comprising a porous ceramic body and a nanoscale metal coating layer provided on the surface of the porous ceramic body; the porous ceramic body is provided with a plurality of micropores for absorbing, penetrating, and conducting a atomizing liquid, the metal coating layer has through film holes at the position corresponding to surface micropores of the porous ceramic body; the metal coating layer comprises a heating layer, which generates heat to evaporate the atomization liquid after being electrified.

2. The ceramic atomization core with a metal coating layer according to claim 1, wherein the metal coating layer further comprises a transition layer provided between the porous ceramic body and the heating layer, the transition layer and the heating layer are composed of different metals, alloys, or metal compound materials.

3. The ceramic atomization core with a metal coating layer according to claim 1 or 2, wherein the porous ceramic body further comprises a surface treatment layer provided between the porous ceramic body and the metal coating layer.

4. The ceramic atomization core with a metal coating layer according to claim 3, wherein the surface treatment layer is composed of several nanoscale sublayers, and the adjacent sublayers are composed of different materials.

5. The ceramic atomization core with a metal coating layer according to claim 1 or 2, further comprises a protective layer for protecting the heating layer, which is provided on the outer side of the metal coating layer.

6. The ceramic atomization core with a metal coating layer according to claim 1, wherein the porous ceramic body has a porosity of 10% -70%, and the micropores in the porous ceramic body have an average pore size of 0.5um-70um.

7. The ceramic atomization core with a metal coating layer according to claim 1, wherein the porous ceramic body is prepared by sintering a porous ceramic green body, and the porous ceramic green body comprises the following composition materials by weight: 25%-70% ceramic powder, 5%-40% pore forming agent, 5%-40% sintering auxiliary, and 10%-35% forming agent.

8. The ceramic atomization core with a metal coating layer according to claim 7, wherein a material of the ceramic powder comprises at least one selected from the group consisting of kaolin, diatomaceous earth, alumina, silicon nitride, silicon carbide, quartz sand, glass sand, clay, feldspar powder, fused quartz, cordierite, and mullite.

9. The ceramic atomization core with a metal coating layer according to claim 7, wherein the ceramic powder further comprises nano silica.

10. The ceramic atomization core with a metal coating layer according to claim 7, wherein the ceramic powder has a granularity of 100 mesh - 2000 mesh.

11. The ceramic atomization core with a metal coating layer according to claim 7, wherein a material of the pore forming agent comprises at least one selected from the group consisting of graphite, starch, wood powder, flour, soybean powder, polystyrene microspheres, polymethyl methacrylate microspheres, sucrose, and plant fibers.

12. The ceramic atomization core with a metal coating layer according to claim 7, wherein the pore forming agent has a particle size of Sum-100um.

13. The ceramic atomization core with a metal coating layer according to claim 7, wherein a material of the sintering auxiliary comprises at least one selected from the group consisting of boron oxide, sodium silicate, silicon oxide, potassium oxide, lithium oxide, barium oxide, magnesium oxide, calcium oxide, iron oxide, titanium oxide, zinc oxide, and zirconia.

14. The ceramic atomization core with a metal coating layer according to claim 7, wherein a material of the forming agent comprises at least one selected from the group consisting of paraffin, beeswax, boric acid, oleic acid, stearic acid, polyethylene, polypropylene, polyvinyl acetate, polyvinyl acetal, ethylene acetate vinyl copolymer resin, vinyl chloride vinyl acetate copolymer resin, perchloroethylene resin, polyacrylate, and polyamide.

15. The ceramic atomization core with a metal coating layer according to claim 3 or 4, wherein a material of the surface treatment layer comprises at least one selected from the group consisting of zirconia, silicon oxide, aluminum nitride, and silicon nitride.

16. The ceramic atomization core with a metal coating layer according to claim 3 or 4, wherein a thickness of the surface treatment layer is 5nm-500nm.

17. The ceramic atomization core with a metal coating layer according to claim 2, wherein a material of the transition layer comprises at least one selected from the group consisting of titanium, tantalum, niobium, titanium nitride, tantalum nitride, and niobium nitride, and a material of the heating layer comprises at least one selected from the group consisting of platinum, silver, palladium, nickel, chromium, silver palladium alloy, and nickel chromium alloy.

18. The ceramic atomization core with a metal coating layer according to claim 2, wherein a thickness of the transition layer is 5nm-200nm, and a thickness of the heating layer is 50nm-1500nm.

19. The ceramic atomization core with a metal coating layer according to claim 2, wherein the transition layer and heating layer are prepared by a metal coating process selected from the group consisting of direct current sputtering method, magnetron sputtering method, and vacuum evaporation method.

20. The ceramic atomization core with a metal coating layer according to claim 5, wherein a material of the protective layer comprises at least one selected from the group consisting of aluminum oxide, silicon nitride, boron nitride, titanium nitride, and tantalum nitride.

21. The ceramic atomization core with a metal coating layer according to claim 20, wherein a thickness of the protective layer is 50nm-1um.

22. The ceramic atomization core with a metal coating layer according to claim 1, wherein two distal ends of the metal coating layer are provided with an electrode layer closely fit and bonded to the metal coating layer.

23. The ceramic atomization core with a metal coating layer according to claim 22, wherein the electrode layer has a thickness of 10um-200um and is prepared by printing a silver paste, a silver palladium paste, or a nickel chromium paste on the porous ceramic body or the metal coating layer, then sintering.

24. A preparation method of a ceramic atomization core with a metal coating layer, comprising the following steps:
(1) weighing a ceramic powder, a sintering auxiliary, a pore forming agent, and a forming agent according to a composition, and mixing the weighed materials with an internal mixer and granulating to obtain a granulation body;
(2) adding the granulation body into a mold in an injection molding machine to obtain a porous ceramic green body through injection molding;
(3) embedding the porous ceramic green body into a dewaxing powder and performing dewaxing sintering, then washing away the dewaxing powder and drying the green body, and performing a secondary sintering to obtain a porous ceramic body;
(4) subjecting the porous ceramic body to ultrasonic cleaning, drying, and vacuum drying treatment;
(5) placing the porous ceramic body in a coating fixture with only an atomizing surface of the porous ceramic body exposed, coating the exposed surface of the porous ceramic body through physical vapor deposition coating technology, namely PVD technology, using a magnetron sputtering instrument, to form a transition layer;
(6) after forming the transition layer, coating the transition layer by PVD technology, using a magnetron sputtering instrument, to form a heating layer;
(7) after forming the heating layer, placing the porous ceramic body in a printing fixture, and printing a silver paste on the two distal ends of the heating layer through a pre-made screen, then leveling at a set temperature;
(8) transferring the porous ceramic body printed with the silver paste to an oven for drying, and finally sintering to obtain a silver electrode layer.

25. A preparation method of a ceramic atomization core with a metal coating layer, comprising the following steps:
(1) weighing a ceramic powder, a sintering auxiliary, a pore forming agent, and a forming agent according to a composition, and mixing the weighed materials with an internal mixer and granulating to obtain a granulation body;
(2) adding the granulation body in a mold of an injection molding machine to obtain a porous ceramic green body through injection molding;
(3) embedding the porous ceramic green body into a dewaxing powder and performing dewaxing sintering, washing away the dewaxing powder and drying, and performing a secondary sintering to obtain the porous ceramic body;
(4) placing the porous ceramic body in a printing fixture, and printing a silver paste on the two distal ends of the porous ceramic body through a pre-made screen, then leveling at a set temperature;
(5) transferring the porous ceramic body into an oven for drying, and finally sintering to obtain a ceramic atomization core with a silver electrode layer;
(6) subjecting the porous ceramic body to ultrasonic cleaning, drying, and vacuum drying treatment;
(7) placing the porous ceramic body in a coating fixture with only the atomizing surface of the porous ceramic body exposed, coating the exposed surface of the porous ceramic body through physical vapor deposition coating technology, namely PVD technology, using a magnetron sputtering instrument, to form a transition layer;
(8) after forming the transition layer, coating the transition layer through PVD technology, using a magnetron sputtering, to form a heating layer.

26. A preparation method of a ceramic atomization core with a metal coating layer, comprising the following steps:
(1) weighing a ceramic powder, a sintering auxiliary, a pore forming agent, and a forming agent according to a composition, and mixing the weighed materials with an internal mixer and granulating to obtain a granulation body;
(2) adding the granulation body into a mold of an injection molding machine to obtain a porous ceramic green body through injection molding;
(3) embedding the porous ceramic green body into a dewaxing powder and performing dewaxing sintering, washing away the dewaxing powder and drying, and performing a secondary sintering to obtain the porous ceramic body;
(4) subjecting the porous ceramic body to ultrasonic cleaning, drying, and vacuum drying treatment;
(5) placing the porous ceramic body in a fixture, with only an atomizing surface of the porous ceramic body exposed, subjecting the exposed surface of the porous ceramic body to a surface treatment through PVD coating technology or CVD coating technology, to obtain a surface treatment layer;
(6) placing the surface treated porous ceramic body in a coating fixture, with only the atomizing surface of the porous ceramic body exposed, and coating the surface treatment layer of the porous ceramic body through physical vapor deposition coating technology, namely PVD technology, using a magnetron sputtering instrument, to form a transition layer;
(7) after forming the transition layer, coating the transition layer through PVD technology, using a magnetron sputtering instrument, to form a heating layer;
(8) after forming the heating layer, placing the porous ceramic body in a printing fixture, and printing a silver paste on the two distal ends of the heating layer through a pre-made screen; leveling at a set temperature after the printing;
(9) transferring the porous ceramic body to an oven for drying after printing the silver paste, finally sintering to obtain a silver electrode layer;
(10) further subjecting the outer surface of the heating layer to a coating protection treatment to obtain a protective layer.

27. The preparation method of a ceramic atomization core with a metal coating layer according to claim 24, 25 or 26, wherein the dewaxing is carried out at a temperature of 300°C-800°C, and the secondary sintering is carried out at a temperature of 700°C-1200°C.

28. The preparation method of a ceramic atomization core with a metal coating layer according to claim 24, 25 or 26, wherein the transition layer is formed with a titanium target having a purity higher than 99%, and the transition layer has a thickness of 5nm-200nm.

29. The preparation method of a ceramic atomization core with a metal coating layer according to claim 24, 25 or 26, wherein the heating layer is formed with a platinum target having a purity higher than 99%, and the heating layer has a thickness of 50nm-1500nm.

30. The preparation method of a ceramic atomization core with a metal coating layer according to claim 26, the surface treatment is carried out by PVD coating or CVD coating on the atomizing surface of the porous ceramic body using at least one of zirconia, silicon oxide, aluminum nitride, or silicon nitride, to obtain the surface treatment layer with a thickness of 5nm-500nm.

31. The preparation method of a ceramic atomization core with a metal coating layer according to claim 30, wherein the surface treatment layer is obtained by four consecutive PVD coatings with zirconia, silicon oxide, zirconia, and silicon oxide on the atomizing surface of the porous ceramic body.

32. The preparation method of a ceramic atomization core with a metal coating layer according to claim 26, wherein the coating with the protective layer is carried out by PVD coating on the outer surface of the silver electrode layer and the heating layer, using at least one of alumina, silicon nitride, boron nitride, titanium nitride, and tantalum nitride, to obtain the protective layer with a thickness of 50nm-1um.
